# EUROPEAN PATENT APPLICATION

(11) **EP 4 589 674 A1**
(43) Date of publication of application: **23.07.2025**
(21) Application number: 23865072.5
(22) Date of filing: 20.07.2023
(51) Int. Cl.: H01M 4/13, H01G 11/28, H01G 11/86, H01M 4/02, H01M 4/04, H01M 4/139, H01M 4/64, H01M 4/66, H01M 10/04, H01M 10/052, H01M 10/0585, H01M 50/186, H01M 50/569

(54) **BIPOLAR ELECTRODE, BIPOLAR BATTERY, AND BIPOLAR ELECTRODE MANUFACTURING METHOD**

(30) Priority: 15.09.2022 JP 2022146932
(71) Applicant: TOYOTA JIDOSHA KABUSHIKI KAISHA, Toyota-shi Aichi 471-8571 (JP)
(72) Inventor: IKEDA, Takenori, Toyota-shi, Aichi 471-8571 (JP); MORIYAMA, Satoshi, Toyota-shi, Aichi 471-8571 (JP); YAMAKITA, Masashi, Toyota-shi, Aichi 471-8571 (JP); MIMURA, Tetsuya, Toyota-shi, Aichi 471-8571 (JP)
(74) Representative: D Young & Co LLP
(86) International application number: PCT/JP2023/026553
(87) International publication number: WO 2024/057710

(57) **Abstract**

A bipolar electrode (11) includes a first active material layer (132), a first current collector (131), an intermediate conductor (12), a second current collector (141), and a second active material layer (142) that are stacked in order in a stacking direction, wherein the first active material layer (132) is provided on a first surface (131a) of the first current collector (131), the second active material layer (142) is provided on a second main surface (141b) of the second current collector (141), a second surface (131b) of the first current collector (131) is bonded to a front surface (12a) of the intermediate conductor (12), a first main surface (141a) of the second current collector (141) is bonded to a back surface (12b) of the intermediate conductor (12), the second active material layer (142) is located inside the first active material layer (131) when viewed from the stacking direction, and in a length direction, a length of the intermediate conductor (12) is longer than lengths of the first current collector (131) and the second current collector (141).

## Description

### TECHNICAL FIELD

The present disclosure relates to a bipolar electrode, a bipolar battery, and a method for manufacturing a bipolar electrode.

### BACKGROUND ART

As a conventional bipolar electrode, for example, Japanese Patent Laying-Open No. 2005-317468 (PTL 1) discloses a bipolar electrode configured to have a positive electrode current collector obtained by being pressed with a positive electrode active material layer being formed on one surface thereof so that the positive electrode active material layer is compressed to a desired thickness, and a negative electrode current collector obtained by being pressed with a negative electrode active material layer being formed on one surface thereof so that the negative electrode active material layer is compressed to a desired thickness, wherein a surface of the positive electrode current collector on which the positive electrode active material layer is not formed and a surface of the negative electrode current collector on which the negative electrode active material layer is not formed are connected to each other by a conductive adhesive layer, in a state in which the surfaces face each other.

### CITATION LIST

### PATENT LITERATURE

PTL 1: Japanese Patent Laying-Open No. 2005-317468

### SUMMARY

### TECHNICAL PROBLEM

In PTL 1, the positive electrode active material layer and the negative electrode active material layer are formed to have the same width, and similarly, the positive electrode current collector and the negative electrode current collector are formed to have the same width that is larger than the width of the positive electrode active material layer and the negative electrode active material layer.

In this case, depending on the positioning accuracy, a portion where the positive electrode active material layer does not face the negative electrode active material layer may be generated. It is known that dendrites are generated when the negative electrode active material layer cannot completely occlude cations (for example, lithium ions) released from the positive electrode active material layer. Since generation of the dendrites may cause a micro short circuit, there is a concern that battery performance may be deteriorated.

In order to suppress such a micro short circuit and to sufficiently ensure the capacity of cations occluded by the negative electrode active material layer, the positive electrode active material layer is provided to be small such that the positive electrode active material layer does not protrude from the negative electrode active material layer when viewed from a stacking direction. However, in the case where the positive electrode active material layer is simply provided to be small, when the surface of the positive electrode current collector on which the positive electrode active material layer is not formed and the surface of the negative electrode current collector on which the negative electrode active material layer is not formed are pressed in the stacking direction with the conductive adhesive layer being interposed therebetween, it is difficult to press a portion exposed outward from the positive electrode active material layer when viewed from the stacking direction.

Accordingly, there is a concern that air bubbles may not be released from the conductive adhesive layer at the portion exposed outward from the positive electrode active material layer when viewed from the stacking direction, and conduction failure may occur.

The present disclosure has been made in view of the problems as described above, and an object of the present disclosure is to provide a bipolar electrode, a bipolar battery, and a method for manufacturing a bipolar electrode that can suppress deterioration in battery performance and conduction failure.

### SOLUTION TO PROBLEM

A bipolar electrode according to the present disclosure includes a first active material layer, a first current collector, an intermediate conductor, a second current collector, and a second active material layer that are stacked in order in a stacking direction. The intermediate conductor has a front surface located on one side in the stacking direction, and a back surface located on another side in the stacking direction. The first current collector has a first surface located on the one side in the stacking direction, and a second surface located on the other side in the stacking direction. The second current collector has a first main surface located on the one side in the stacking direction, and a second main surface located on the other side in the stacking direction. The first active material layer is provided on the first surface of the first current collector. The second active material layer is provided on the second main surface of the second current collector. The second surface of the first current collector is bonded to the front surface of the intermediate conductor. The first main surface of the second current collector is bonded to the back surface of the intermediate conductor. In a length direction orthogonal to the stacking direction, a length of the first active material layer is longer than a length of the second active material layer. The second active material layer is located inside the first active material layer when viewed from the stacking direction. In the length direction, a length of the intermediate conductor is longer than lengths of the first current collector and the second current collector.

According to the above configuration, since the length of the first active material layer is longer than the length of the second active material layer, it is possible to suppress formation of a region in the second active material layer where the second active material layer does not face the first active material layer when viewed from the stacking direction. Thereby, deterioration in battery performance can be suppressed.

In addition, since the first current collector provided with the first active material layer and the second current collector provided with the second active material layer can be individually bonded to the front surface and the back surface of the intermediate conductor, respectively, the state of bonding between the second surface of the first current collector and the front surface of the intermediate conductor and the state bonding between the first main surface of the second current collector and the back surface of the intermediate conductor can each be stabilized. As a result, conduction failure can be suppressed.

Further, since the length of the intermediate conductor is longer than the lengths of the first current collector and the second current collector, the first current collector and the second current collector can be suppressed from protruding from the intermediate conductor when the first current collector and the second current collector are bonded to the intermediate conductor.

**In** the bipolar electrode according to the present disclosure, a density of the first active material layer may be lower than a density of the second active material layer.

According to the above configuration, the first active material layer and the second active material layer can be provided at densities appropriate for battery performance, and desired battery performance can be obtained.

**In** the bipolar electrode according to the present disclosure, in the length direction, the length of the first current collector may be longer than the length of the second current collector.

According to the above configuration, by providing the first active material layer on the first current collector longer than the second current collector, the first active material layer longer than the second active material layer can be reliably formed.

The bipolar electrode according to the present disclosure may include a first conductive adhesive layer bonding the second surface of the first current collector and the front surface of the intermediate conductor, and a second conductive adhesive layer bonding the first main surface of the second current collector and the back surface of the intermediate conductor.

According to the above configuration, by using the first conductive adhesive layer and the second conductive adhesive layer, it is possible to substantially uniformly bond the first current collector and the second current collector to the intermediate conductor while suppressing an increase in thickness.

**In** the bipolar electrode according to the present disclosure, the first conductive adhesive layer and the second conductive adhesive layer may contain conductive particles obtained by metal-coating resin powder.

According to the above configuration, since the resin powder is metal-coated, the first current collector and the second current collector can be bonded to the intermediate conductor in a state in which a substantially equal elasticity is ensured while cost is reduced, as compared with the case of using metal particles.

**In** the bipolar electrode according to the present disclosure, thicknesses of the first conductive adhesive layer and the second conductive adhesive layer parallel to the stacking direction may be substantially equal to a particle diameter of the conductive particles.

According to the above configuration, the thickness of the bipolar electrode can be reduced by reducing the thicknesses of the first conductive adhesive layer and the second conductive adhesive layer.

In the bipolar electrode according to the present disclosure, the intermediate conductor may have a side portion located on one side in the length direction when viewed from the stacking direction and constituting a portion of an outer edge of the intermediate conductor, and a tab protruding outward in the length direction from the side portion.

According to the above configuration, when the bipolar electrodes are stacked, the tab can be used as a potential detection terminal.

A bipolar battery according to the present disclosure includes a stacked body including a plurality of the bipolar electrodes stacked along the stacking direction, and a sealing body sealing a peripheral edge portion of the stacked body to surround the first active material layer and the second active material layer when viewed from the stacking direction.

According to the above configuration, by using the bipolar electrodes, deterioration in battery performance and conduction failure can be suppressed.

A method for manufacturing a bipolar electrode according to the present disclosure includes stacking a first active material layer, a first current collector, an intermediate conductor, a second current collector, and a second active material layer in a stacking direction. The stacking includes forming the first active material layer on a first surface of the first current collector having the first surface and a second surface opposite to each other, forming the second active material layer on a second main surface of the second current collector having a first main surface and the second main surface opposite to each other, bonding the second surface to a front surface of the intermediate conductor, and bonding the first main surface to a back surface of the intermediate conductor. In the forming of the second active material layer, the second active material layer is formed such that a length of the second active material layer in a length direction orthogonal to the stacking direction is shorter than that of the first active material layer. In the bonding of the first surface of the second current collector, the second current collector is bonded such that the second active material layer is located inside the first active material layer when viewed from the stacking direction. As the intermediate conductor, an intermediate conductor having a length longer than those of the first current collector and the second current collector is used.

According to the above configuration, since the length of the first active material layer is longer than the length of the second active material layer, it is possible to suppress formation of a region in the second active material layer where the second active material layer does not face the first active material layer when viewed from the stacking direction. Thereby, deterioration in battery performance can be suppressed.

In addition, since the first current collector provided with the first active material layer and the second current collector provided with the second active material layer can be individually bonded to the front surface and the back surface of the intermediate conductor, respectively, the state of bonding between the second surface of the first current collector and the front surface of the intermediate conductor and the state bonding between the first main surface of the second current collector and the back surface of the intermediate conductor can each be stabilized. As a result, conduction failure can be suppressed. Further, since the length of the intermediate conductor is longer than the lengths of the first current collector and the second current collector, the first current collector and the second current collector can be suppressed from protruding from the intermediate conductor when the first current collector and the second current collector are bonded to the intermediate conductor.

In the method for manufacturing the bipolar electrode according to the present disclosure, the forming of the first active material layer may include pressing the first active material layer applied to the first surface of the first current collector, and the forming of the second active material layer may include pressing the second active material layer applied to the first surface of the first current collector. In this case, a pressure for pressing the second active material layer is preferably greater than a pressure for pressing the first active material layer.

According to the above configuration, the first active material layer and the second active material layer can be provided at densities appropriate for battery performance, and desired battery performance can be obtained.

In the method for manufacturing the bipolar electrode according to the present disclosure, the bonding of the second surface of the first current collector may include applying a first conductive adhesive layer to the second surface, and pressing the first current collector toward the intermediate conductor in a state in which the applied first conductive adhesive layer is in contact with the front surface of the intermediate conductor. Further, the bonding of the first main surface of the second current collector may include applying a second conductive adhesive layer to the second main surface, and pressing the second current collector toward the intermediate conductor in a state in which the applied second conductive adhesive layer is in contact with the back surface of the intermediate conductor.

According to the above configuration, the first current collector and the second current collector can be substantially uniformly bonded to the intermediate conductor by the first conductive adhesive layer and the second conductive adhesive layer.

In the method for manufacturing the bipolar electrode according to the present disclosure, as the first conductive adhesive layer and the second conductive adhesive layer, conductive adhesive layers containing conductive particles obtained by metal-coating resin powder may be used.

According to the above configuration, since the resin powder is metal-coated, the first current collector and the second current collector can be bonded to the intermediate conductor in a state in which a substantially equal elasticity is ensured while cost is reduced, as compared with the case of using metal particles.

In the method for manufacturing the bipolar electrode according to the present disclosure, in the bonding of the second surface of the first current collector, the first current collector may be bonded to the intermediate conductor such that the first conductive adhesive layer parallel to the stacking direction is substantially equal to a particle diameter of the conductive particles. Further, in the bonding of the first surface of the second current collector, the second current collector may be bonded to the intermediate conductor such that the second conductive adhesive layer parallel to the stacking direction is substantially equal to the particle diameter of the conductive particles.

According to the above configuration, the thickness of the bipolar electrode can be reduced by reducing the thicknesses of the first conductive adhesive layer and the second conductive adhesive layer.

In the method for manufacturing the bipolar electrode according to the present disclosure, the forming of the first active material layer may include pressing the first active material layer applied to the first surface of the first current collector. The forming of the second active material layer may include pressing the second active material layer applied to the first surface of the first current collector. In this case, each of a pressure for pressing the first current collector toward the intermediate conductor and a pressure for pressing the second current collector toward the intermediate conductor is preferably smaller than a pressure for pressing the first active material layer and a pressure for pressing the second active material layer.

According to the above configuration, when the first current collector and the second current collector provided with the first active material layer and the second active material layer formed at desired densities are individually bonded to the intermediate conductor, influence on the first active material layer and the second active material layer can be reduced by reducing the pressing pressures.

In the method for manufacturing the bipolar electrode according to the present disclosure, in the length direction orthogonal to the stacking direction, the length of the first current collector is longer than the length of the second current collector.

According to the above configuration, by providing the first active material layer on the first current collector longer than the second current collector, the first active material layer longer than the second active material layer can be reliably formed.

In the method for manufacturing the bipolar electrode according to the present disclosure, the intermediate conductor may have a side portion located on one side in the length direction when viewed from the stacking direction and constituting a portion of an outer edge of the intermediate conductor, and a tab protruding outward in the length direction from the side portion. In this case, the bonding of the second surface of the first current collector preferably includes determining a position for bonding the first current collector to the intermediate conductor using the tab as a mark, and the bonding of the first main surface of the second current collector preferably includes determining a position for bonding the second current collector to the intermediate conductor using the tab as a mark.

According to the above configuration, since the positions are determined using the tab as a mark, accuracy of the bonding positions can be improved.

### ADVANTAGEOUS EFFECTS

According to the present disclosure, it is possible to provide a bipolar electrode that can suppress deterioration in battery performance and conduction failure.

### BRIEF DESCRIPTION OF DRAWINGS

Fig. 1 is a schematic cross sectional view showing a power storage device according to an embodiment.
Fig. 2 is a schematic cross sectional view showing a power storage module according to the embodiment.
Fig. 3 is a cross sectional view showing a bipolar electrode according to the embodiment.
Fig. 4 is a flowchart showing a manufacturing process for the bipolar electrode according to the embodiment.
Fig. 5 is a view showing a step of forming a negative electrode active material layer on a negative electrode current collector plate in the manufacturing process for the bipolar electrode shown in Fig. 4.
Fig. 6 is a view showing a step of forming a positive electrode active material layer on a positive electrode current collector plate in the manufacturing process for the bipolar electrode shown in Fig. 4.
Fig. 7 is a view showing a first step of a step of bonding the negative electrode current collector plate to a front surface of an intermediate conductor in the manufacturing process for the bipolar electrode shown in Fig. 4.
Fig. 8 is a view showing a second step of the step of bonding the positive electrode current collector plate to the front surface of the intermediate conductor in the manufacturing process for the bipolar electrode shown in Fig. 4.
Fig. 9 is a view showing a first step of a step of bonding the positive electrode current collector plate to a back surface of the intermediate conductor in the manufacturing process for the bipolar electrode shown in Fig. 4.
Fig. 10 is a view showing a second step of the step of bonding the negative electrode current collector plate to the back surface of the intermediate conductor in the manufacturing process for the bipolar electrode shown in Fig. 4.
Fig. 11 is a view showing a modification of the step of forming the negative electrode active material layer on the negative electrode current collector plate.
Fig. 12 is a view showing a first modification of the step of bonding the negative electrode current collector plate to the front surface of the intermediate conductor and the step of bonding the positive electrode current collector plate to the back surface of the intermediate conductor.
Fig. 13 is a view showing a second modification of the step of bonding the negative electrode current collector plate to the front surface of the intermediate conductor.

### DESCRIPTION OF EMBODIMENTS

Hereinafter, an embodiment of the present disclosure will be described in detail with reference to the drawings. It should be noted that, in the embodiment described below, the same or common parts will be designated by the same reference numerals in the drawings, and the description thereof will not be repeated.

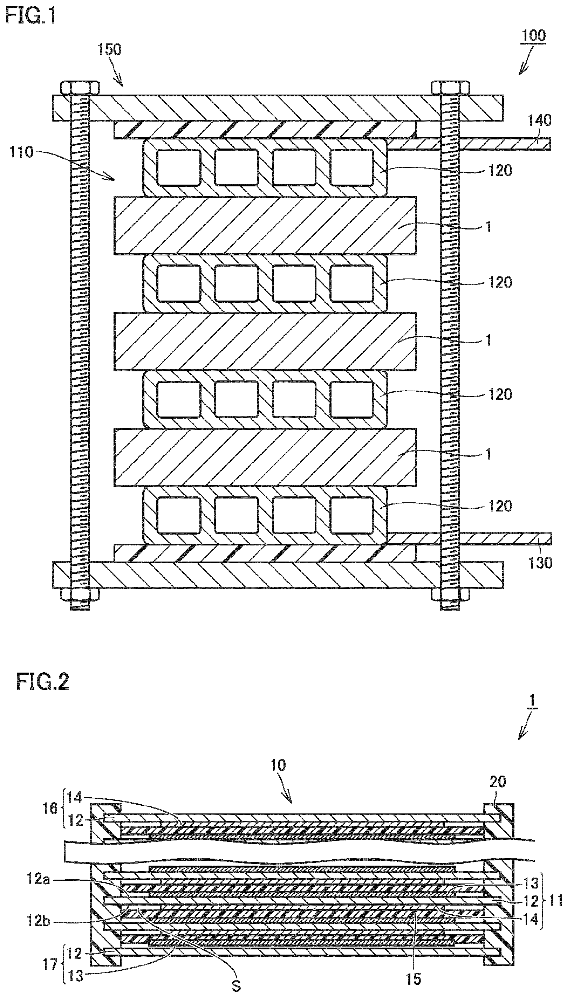

Fig. 1 is a schematic cross sectional view showing a power storage device according to an embodiment. Referring to Fig. 1, a power storage device 100 according to the embodiment will be described. Power storage device 100 is used as a battery for a vehicle such as a hybrid vehicle or an electric vehicle, for example.

As shown in Fig. 1, power storage device 100 includes a module stacked body 110 and a pair of restraining members 150. The pair of restraining members 150 restrain module stacked body 110 from both sides in a stacking direction of module stacked body 110. An insulating member is disposed between each of the pair of restraining members 150 and module stacked body 110.

Module stacked body 110 includes a plurality of bipolar batteries 1 and a plurality of conductive plates 120 stacked on each other. The plurality of bipolar batteries 1 and the plurality of conductive plates 120 are arranged to be alternately adjacent to each other in the stacking direction of module stacked body 110.

Bipolar battery 1 has a rectangular outer shape when viewed from the stacking direction of module stacked body 110. Bipolar batteries 1 adjacent to each other are electrically connected via conductive plate 120. A positive electrode terminal 130 is connected to conductive plate 120 located at one of both end portions in the stacking direction of module stacked body 110. A negative electrode terminal 140 is connected to conductive plate 120 located at the other of the both end portions in the stacking direction of module stacked body 110.

Bipolar battery 1 is a so-called bipolar battery. More specifically, bipolar battery 1 may be a laminate-type aqueous battery. Bipolar battery 1 is a secondary battery such as a nickel-hydrogen secondary battery or a lithium-ion secondary battery, or an electric double layer capacitor, for example.

It should be noted that bipolar battery 1 has a length of about 1300 mm to 1700 mm in a first direction orthogonal to the stacking direction, and a width of about 1000 mm to 1400 mm in a second direction orthogonal to the stacking direction and the first direction.

Fig. 2 is a schematic cross sectional view showing a power storage module according to the embodiment. Referring to Fig. 2, bipolar battery 1 according to the embodiment will be described.

As shown in Fig. 2, bipolar battery 1 includes a stacked body 10 and a sealing portion 20. Stacked body 10 includes a plurality of bipolar electrodes 11, a plurality of separators 15, termination electrodes 16 and 17, and an electrolytic solution. The plurality of bipolar electrodes 11 are stacked along the stacking direction (an up/down direction in Fig. 2), and separator 15 is interposed between bipolar electrodes 11 adjacent to each other.

Bipolar electrode 11 includes an intermediate conductor 12, a negative electrode portion 13, and a positive electrode portion 14. Negative electrode portion 13, intermediate conductor 12, and positive electrode portion 14 are stacked in this order from one side toward the other side in the stacking direction.

Intermediate conductor 12 is formed of a plate-like conductive member. Intermediate conductor 12 may be made of, for example, a metal including at least one selected from the group consisting of aluminum (Al), stainless steel, nickel (Ni), chromium (Cr), platinum (Pt), niobium (Nb), iron (Fe), titanium (Ti), and zinc (Zn), or may be formed by plating a surface of a metal foil. In order to reduce thickness while having strength, it is preferable to adopt aluminum as intermediate conductor 12.

Intermediate conductor 12 has a front surface 12a located on the one side in the stacking direction, and a back surface 12b located on the other side in the stacking direction. Negative electrode portion 13 is provided on a front surface 12a side of intermediate conductor 12. Positive electrode portion 14 is provided on a back surface 12b side of intermediate conductor 12.

Termination electrode 16 constitutes an end portion of stacked body 10 on the one side in the stacking direction. Termination electrode 16 includes intermediate conductor 12 and positive electrode portion 14. In termination electrode 16, positive electrode portion 14 is provided on back surface 12b of intermediate conductor 12, and neither negative electrode portion 13 nor positive electrode portion 14 is provided on front surface 12a of intermediate conductor 12.

Termination electrode 17 constitutes an end portion of stacked body 10 on the other side in the stacking direction. Termination electrode 17 includes intermediate conductor 12 and negative electrode portion 13. In termination electrode 17, negative electrode portion 13 is provided on front surface 12a of intermediate conductor 12, and neither negative electrode portion 13 nor positive electrode portion 14 is provided on back surface 12b of intermediate conductor 12.

Separator 15 is disposed between bipolar electrodes 11 adjacent to each other. Specifically, separator 15 is disposed between positive electrode portion 14 of bipolar electrode 11 located on the one side in the stacking direction and negative electrode portion 13 of bipolar electrode 11 located on the other side in the stacking direction.

Separator 15 is formed in a sheet shape, for example. Examples of separator 15 include a porous film made of a polyolefin-based resin such as polyethylene (PE) or polypropylene (PP), a woven fabric or a nonwoven fabric made of polypropylene, polyethylene terephthalate (PET), methyl cellulose, or the like. Separator 15 may be reinforced with a vinylidene fluoride resin compound.

Sealing portion 20 seals peripheral edges of the plurality of bipolar electrodes 11 such that a space S is formed between bipolar electrodes 11 adjacent to each other along the stacking direction. Sealing portion 20 seals space S on the inside.

The peripheral edges of the plurality of bipolar electrodes 11 are embedded in sealing portion 20, and thereby sealing portion 20 holds the plurality of bipolar electrodes 11.

Sealing portion 20 is made of an insulating resin, for example. Sealing portion 20 may be made of polypropylene (PP), polyphenylene sulfide (PPS), modified polyphenylene ether (modified PPE), or the like, for example.

The electrolytic solution is accommodated in space S described above. The electrolytic solution includes an aqueous alkali solution such as an aqueous potassium hydroxide solution, for example. Negative electrode portion 13, positive electrode portion 14, and separator 15 are impregnated with the electrolytic solution.

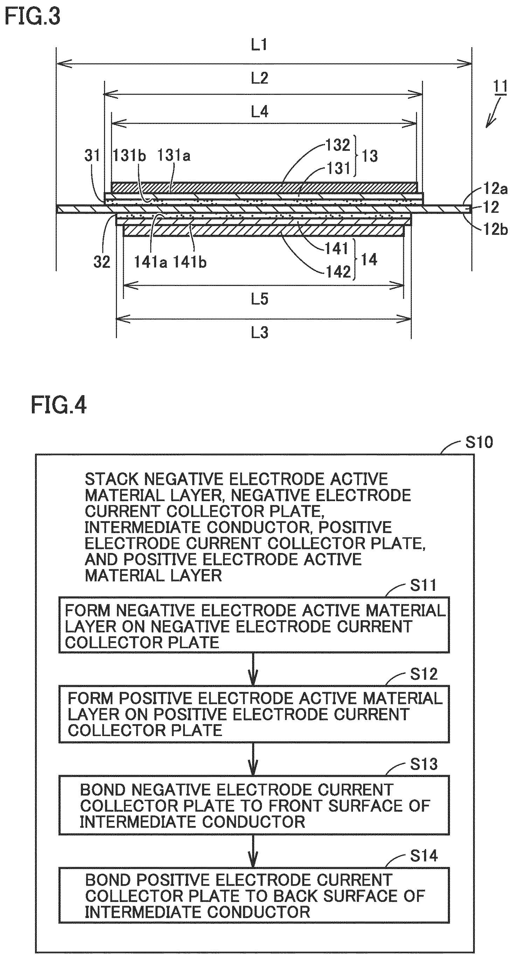

Fig. 3 is a cross sectional view showing the bipolar electrode according to the embodiment. Referring to Fig. 3, a detailed configuration of bipolar electrode 11 according to the embodiment will be described.

As shown in Fig. 3, in bipolar electrode 11, negative electrode portion 13 includes a negative electrode active material layer 132 as a first active material layer, and a negative electrode current collector plate 131 as a first current collector.

Negative electrode current collector plate 131 has a first surface 131a located on the one side in the stacking direction, and a second surface 131b located on the other side in the stacking direction. Negative electrode current collector plate 131 is constituted by a metal member such as aluminum (Al) foil, for example.

Negative electrode active material layer 132 is formed by being applied to first surface 131a and pressed. The density of negative electrode active material layer 132 is about 1.4 g/cm³ to 1.8 g/cm³, for example.

The density of negative electrode active material layer 132 is lower than the density of a positive electrode active material layer 142 described later. By setting the densities of negative electrode active material layer 132 and positive electrode active material layer 142 to desired values, battery performance can be improved.

As a negative electrode active material contained in the negative electrode active material layer, lithium, carbon, a metal compound, an element that can be alloyed with lithium, a compound thereof, or the like can be adopted.

Positive electrode portion 14 includes positive electrode active material layer 142 as a second active material layer, and a positive electrode current collector plate 141 as a second current collector.

Positive electrode current collector plate 141 has a first main surface 141a located on the one side in the stacking direction, and a second main surface 141b located on the other side in the stacking direction. Positive electrode current collector plate 141 is constituted by a metal member such as copper foil, for example.

Positive electrode active material layer 142 is formed by being applied to second main surface 141b and pressed. The density of positive electrode active material layer 142 is about 2.2 g/cm³ to 2.8 g/cm³, for example.

As the positive electrode active material layer, for example, a positive electrode active material layer that can occlude and release charge carriers such as lithium ions can be adopted. Specifically, as a positive electrode active material, a material that can be used as a positive electrode active material for a lithium-ion secondary battery, such as a lithium-ion composite metal oxide having a layered rock salt structure, a metal oxide having a spinel structure, or a polyanionic compound, can be adopted. Further, two or more kinds of positive electrode active materials may be used in combination, and for example, the positive electrode active material may include olivine-type lithium iron phosphate (LiFePO₄).

Second surface 131b of negative electrode current collector plate 131 located opposite to first surface 131a provided with negative electrode active material layer 132 is bonded to front surface 12a of intermediate conductor 12. Specifically, second surface 131b is bonded by a first conductive adhesive layer 31 disposed between second surface 131b and front surface 12a.

First main surface 141a of positive electrode current collector plate 141 located opposite to second main surface 141b provided with positive electrode active material layer 142 is bonded to back surface 12b of intermediate conductor 12. Specifically, first main surface 141a is bonded by a second conductive adhesive layer 32 disposed between first main surface 141a and back surface 12b.

By using first conductive adhesive layer 31 and second conductive adhesive layer 32 as described above, it is possible to substantially uniformly bond negative electrode current collector plate 131 and positive electrode current collector plate 141 to the intermediate conductor while suppressing an increase in thickness.

First conductive adhesive layer 31 and second conductive adhesive layer 32 contain a binder resin and a conductive filler. As the binder resin, for example, polyvinyl butyral, cellulose, polyurethane, polyester, epoxy, phenoxy, novolac, alkyd, amide or imide resin, or the like can be adopted.

The conductive filler is dispersed in the binder resin at an appropriate density so as not to aggregate. The conductive filler may contain metal particles of silver, copper, aluminum, nickel, gold, zinc, iron, or the like, or conductive particles obtained by metal-coating resin powder with silver, copper, aluminum, nickel, gold, zinc, iron, or the like may be adopted.

In the case of adopting the conductive particles obtained by metal-coating the resin powder, the first current collector and the second current collector can be bonded to the intermediate conductor in a state in which a substantially equal elasticity is ensured while cost is reduced, as compared with the case of using the metal particles.

Further, the thicknesses of first conductive adhesive layer 31 and second conductive adhesive layer 32 parallel to the stacking direction may be substantially equal to a particle diameter of the conductive particles. Thereby, the thickness of bipolar electrode 11 can be reduced by reducing the thicknesses of first conductive adhesive layer 31 and second conductive adhesive layer 32.

In a length direction orthogonal to the stacking direction, a length L4 of the first active material layer is longer than a length L5 of the second active material layer, and positive electrode active material layer 142 is located inside negative electrode active material layer 132 when viewed from the stacking direction. Thereby, formation of dendrites on a positive electrode active material layer 142 side can be suppressed and deterioration in battery performance can be suppressed, as compared with the case where positive electrode active material layer 142 protrudes from negative electrode active material layer 132 when viewed from the stacking direction.

In the length direction, a length L1 of intermediate conductor 12 is longer than a length L2 of negative electrode current collector plate 131 and a length L3 of positive electrode current collector plate 141. Thereby, when negative electrode current collector plate 131 and positive electrode current collector plate 141 are bonded to intermediate conductor 12, negative electrode current collector plate 131 and positive electrode current collector plate 141 can be suppressed from protruding from intermediate conductor 12.

As described above, since negative electrode current collector plate 131 provided with negative electrode active material layer 132 and positive electrode current collector plate 141 provided with positive electrode active material layer 142 can be individually bonded to front surface 12a and back surface 12b of intermediate conductor 12, respectively, in bipolar electrode 11 according to the embodiment, the state of bonding between second surface 131b of negative electrode current collector plate 131 and front surface 12a of intermediate conductor 12 and the state of bonding between first main surface 141a of positive electrode current collector plate 141 and back surface 12b of intermediate conductor 12 can each be stabilized.

As a result, the state of conduction between negative electrode current collector plate 131 and intermediate conductor 12 and the state of conduction between positive electrode current collector plate 141 and intermediate conductor 12 can be maintained satisfactorily, and conduction failure can be suppressed.

In particular, in the case where bipolar battery 1 has a length of about 1300 mm to 1700 mm in the first direction orthogonal to the stacking direction and a width of about 1000 mm to 1400 mm in the second direction orthogonal to the stacking direction and the first direction as described above, and sizes of negative electrode current collector plate 131 and positive electrode current collector plate 141 per sheet are substantially equal to each other, the effects described above can be significantly exhibited by satisfactorily maintaining the states of bonding as described above. Further, by using first conductive adhesive layer 31 and second conductive adhesive layer 32, satisfactory states of bonding can be easily achieved.

Further, in the stacking direction, the thickness of intermediate conductor 12 is larger than the thickness of negative electrode current collector plate 131. The thickness of negative electrode current collector plate 131 may be smaller than the thickness of positive electrode current collector plate 141. By reducing the thickness of negative electrode current collector plate 131, manufacturing cost can be reduced. By increasing the thickness of intermediate conductor 12, the thickness of negative electrode current collector plate 131 can be reduced. By establishing a thickness relation as described above, negative electrode current collector plate 131 and positive electrode current collector plate 141 can each be reliably bonded to intermediate conductor 12 while ensuring strength. Further, the thickness of bipolar battery 1 including stacked bipolar electrodes 11 can be suppressed, and mounting efficiency can be improved.

### (Manufacturing Method)

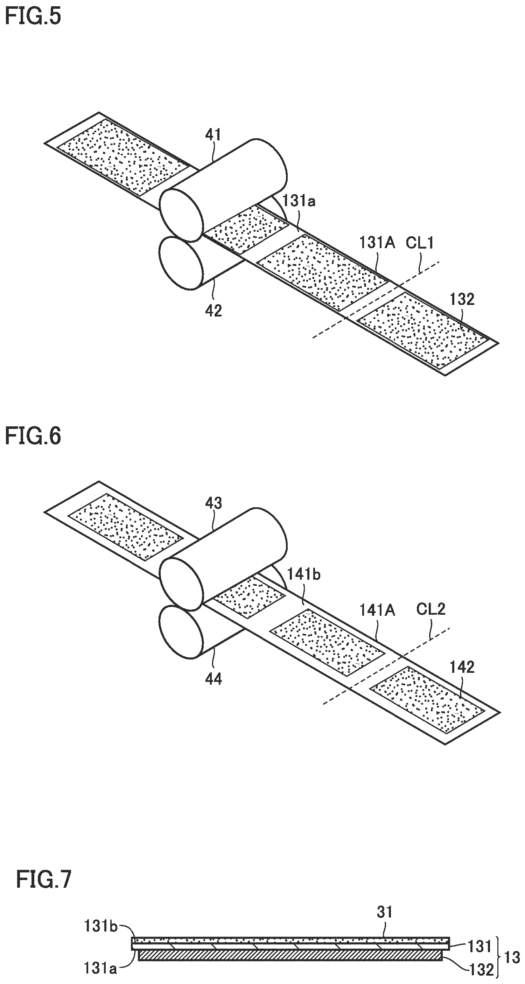

Fig. 4 is a flowchart showing a manufacturing process for the bipolar electrode according to the embodiment. Figs. 5 to 10 are views showing predetermined steps in the manufacturing process for the bipolar electrode shown in Fig. 4. Referring to Figs. 4 to 10, the manufacturing process for the bipolar electrode according to the embodiment will be described.

As shown in Fig. 4, the manufacturing process for the bipolar electrode includes a step (S10) of stacking negative electrode active material layer 132, negative electrode current collector plate 131, intermediate conductor 12, positive electrode current collector plate 141, and positive electrode active material layer 142 having a polarity different from that of negative electrode active material layer 132, in the stacking direction. The step (S10) includes steps (S11) to (S14) described later.

Fig. 5 is a view showing a step of forming the negative electrode active material layer on the negative electrode current collector plate in the manufacturing process for the bipolar electrode shown in Fig. 4.

As shown in Figs. 4 and 5, to manufacture bipolar electrode 11, in the step (S11), negative electrode active material layer 132 is formed on first surface 131a of a belt-like current collector 131A which will serve as negative electrode current collector plate 131. Specifically, negative electrode active material layer 132 applied to first surface 131a is sandwiched between a pair of pressure rollers 41 and 42 and is pressed.

The pressure at which negative electrode active material layer 132 is pressed by the pair of pressure rollers 41 and 42 is about 500 MPa to 1500 MPa, for example.

Negative electrode active material layer 132 may be applied to first surface 131a with a spacing, at a predetermined pitch. In this case, after negative electrode active material layer 132 is pressed by the pair of pressure rollers 41 and 42, belt-like current collector 131A is cut along a cutting line CL1.

Fig. 6 is a view showing a step of forming the positive electrode active material layer on the positive electrode current collector plate in the manufacturing process for the bipolar electrode shown in Fig. 4.

As shown in Figs. 4 and 6, in the step (S12), positive electrode active material layer 142 is formed on second main surface 141b of a belt-like current collector 141A which will serve as positive electrode current collector plate 141. Specifically, positive electrode active material layer 142 applied to second main surface 141b is sandwiched between a pair of pressure rollers 43 and 44 and is pressed.

The pressure at which positive electrode active material layer 142 is pressed by the pair of pressure rollers 43 and 44 is about 2000 MPa to 3000 MPa, for example.

Thus, the pressure for pressing positive electrode active material layer 142 is greater than the pressure for pressing negative electrode active material layer 132. Thereby, negative electrode active material layer 132 and positive electrode active material layer 142 can be provided at densities appropriate for battery performance, and desired battery performance can be obtained.

Positive electrode active material layer 142 may be applied to second main surface 141b with a spacing, at a predetermined pitch. In this case, after positive electrode active material layer 142 is pressed by the pair of pressure rollers 43 and 44, belt-like current collector 141A is cut along a cutting line CL2.

Positive electrode active material layer 142 is formed such that its length in the length direction orthogonal to the stacking direction is shorter than that of negative electrode active material layer 132.

It should be noted that the step (S12) may be performed concurrently with the step (S11), may be performed after the step (S11), or may be performed before the step (S11).

As shown in Fig. 4 again, in the step (S13), second surface 131b of negative electrode current collector plate 131 is bonded to front surface 12a of intermediate conductor 12. That is, second surface 131b located opposite to first surface 131a provided with negative electrode active material layer 132 is bonded to front surface 12a.

Fig. 7 is a view showing a first step of the step of bonding the negative electrode current collector plate to the front surface of the intermediate conductor in the manufacturing process for the bipolar electrode shown in Fig. 4.

As shown in Fig. 7, in the first step of the step (S13), first conductive adhesive layer 31 is applied to second surface 131b. First conductive adhesive layer 31 is applied by an appropriate application device such as a transfer device. The thickness of applied first conductive adhesive layer 31 may be adjusted to a predetermined thickness by a squeegee or the like. As first conductive adhesive layer 31, the conductive adhesive layer described above is used.

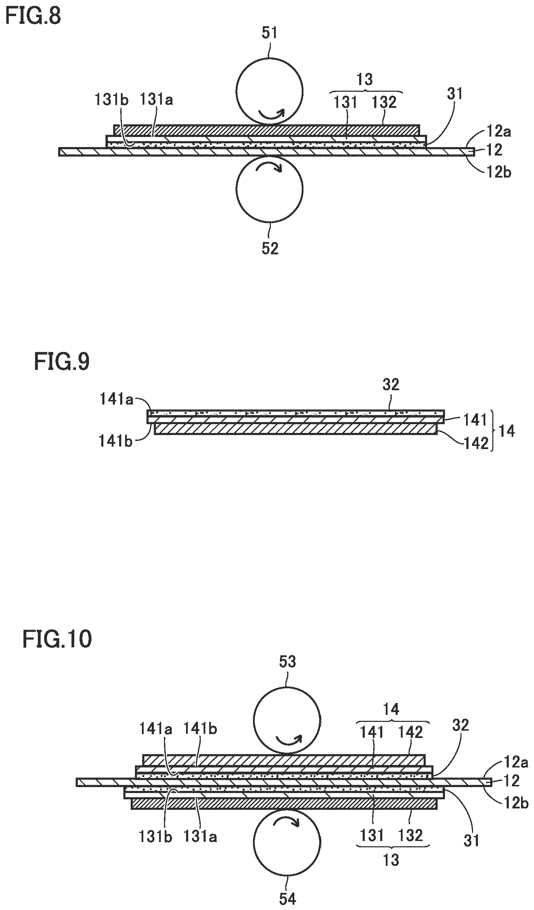

Fig. 8 is a view showing a second step of the step of bonding the negative electrode current collector plate to the front surface of the intermediate conductor in the manufacturing process for the bipolar electrode shown in Fig. 4.

As shown in Fig. 8, in the second step of the step (S13), negative electrode current collector plate 131 is pressed toward intermediate conductor 12 in a state in which applied first conductive adhesive layer 31 is in contact with front surface 12a of intermediate conductor 12.

Specifically, negative electrode current collector plate 131 provided with negative electrode active material layer 132 is placed on front surface 12a of intermediate conductor 12 such that first conductive adhesive layer 31 is interposed between front surface 12a and second surface 131b. Negative electrode current collector plate 131 provided with negative electrode active material layer 132 and intermediate conductor 12 are sandwiched between a pair of pressure rollers 51 and 52 and are pressed.

The pressure for pressing negative electrode current collector plate 131 toward intermediate conductor 12 is about 0.5 MPa to 1.5 MPa, for example.

In the case of using an adhesive containing conductive particles as first conductive adhesive layer 31, the thickness of first conductive adhesive layer 31 is preferably substantially equal to that of the conductive particles in a state in which negative electrode current collector plate 131 is bonded to intermediate conductor 12. Thereby, the thickness of first conductive adhesive layer 31 can be reduced, and thus the thickness of bipolar electrode 11 to be manufactured can be reduced.

As shown in Fig. 4 again, in the step (S14), first main surface 141a of positive electrode current collector plate 141 is bonded to back surface 12b of intermediate conductor 12. That is, first main surface 141a located opposite to second main surface 141b provided with positive electrode active material layer 142 is bonded to back surface 12b.

Fig. 9 is a view showing a first step of the step of bonding the positive electrode current collector plate to the back surface of the intermediate conductor in the manufacturing process for the bipolar electrode shown in Fig. 4.

As shown in Fig. 9, in the first step of the step (S14), second conductive adhesive layer 32 is applied to first main surface 141a. Second conductive adhesive layer 32 is applied in substantially the same manner as first conductive adhesive layer 31. As second conductive adhesive layer 32, the conductive adhesive layer described above is used.

Fig. 10 is a view showing a second step of the step of bonding the positive electrode current collector plate to the back surface of the intermediate conductor in the manufacturing process for the bipolar electrode shown in Fig. 4.

As shown in Fig. 10, in the second step of the step (S14), positive electrode current collector plate 141 is pressed toward intermediate conductor 12 in a state in which applied second conductive adhesive layer 32 is in contact with back surface 12b of intermediate conductor 12.

When positive electrode current collector plate 141 is pressed, negative electrode current collector plate 131 provided with negative electrode active material layer 132 is bonded to front surface 12a of intermediate conductor 12, as described above. In this state, positive electrode current collector plate 141 provided with positive electrode active material layer 142 is placed on front surface 12a of intermediate conductor 12 such that second conductive adhesive layer 32 is interposed between back surface 12b and first main surface 141a. On this occasion, positive electrode current collector plate 141 is placed such that positive electrode active material layer 142 is located inside negative electrode active material layer 132 when viewed from the stacking direction (a normal direction of front surface 12a).

Subsequently, in a state in which negative electrode current collector plate 131 provided with negative electrode active material layer 132 is bonded to a front surface 13a side and positive electrode current collector plate 141 provided with positive electrode active material layer 142 is placed on back surface 12b, these components are sandwiched between a pair of pressure rollers 53 and 54 and are pressed.

The pressure for pressing positive electrode current collector plate 141 toward intermediate conductor 12 when positive electrode current collector plate 141 is bonded to intermediate conductor 12 in this manner is substantially equal to the pressure for pressing negative electrode current collector plate 131 toward intermediate conductor 12 described above, and is about 0.5 MPa to 1.5 MPa, for example.

Each of the pressure for pressing negative electrode current collector plate 131 toward intermediate conductor 12 in the step (S13) and the pressure for pressing positive electrode current collector plate 141 toward intermediate conductor 12 in the step (S14) is smaller than the pressure for pressing negative electrode active material layer 132 in the step (S11) and the pressure for pressing positive electrode active material layer 142 in the step (S12).

When negative electrode current collector plate 131 provided with negative electrode active material layer 132 formed at a desired density and positive electrode current collector plate 141 provided with positive electrode active material layer 142 formed at a desired density are individually bonded to intermediate conductor 12, influence on negative electrode active material layer 132 and positive electrode active material layer 142 can be suppressed by reducing the pressing pressures in the step (S13) and the step (S14).

In the case of using an adhesive containing conductive particles as second conductive adhesive layer 32, the thickness of second conductive adhesive layer 32 is preferably substantially equal to that of the conductive particles in a state in which positive electrode current collector plate 141 is bonded to intermediate conductor 12. Thereby, the thickness of second conductive adhesive layer 32 can be reduced, and thus the thickness of bipolar electrode 11 to be manufactured can be reduced.

Further, in the case of using the conductive particles obtained by metal-coating the resin powder as the conductive particles contained in first conductive adhesive layer 31 and second conductive adhesive layer 32, negative electrode current collector plate 131 and positive electrode current collector plate 141 can be bonded to intermediate conductor 12 in a state in which a substantially equal elasticity is ensured while cost is reduced, as compared with the conductive particles.

### (Modification)

It should be noted that, in the method for manufacturing the bipolar electrode according to the embodiment, a portion of the manufacturing process may be changed as described below.

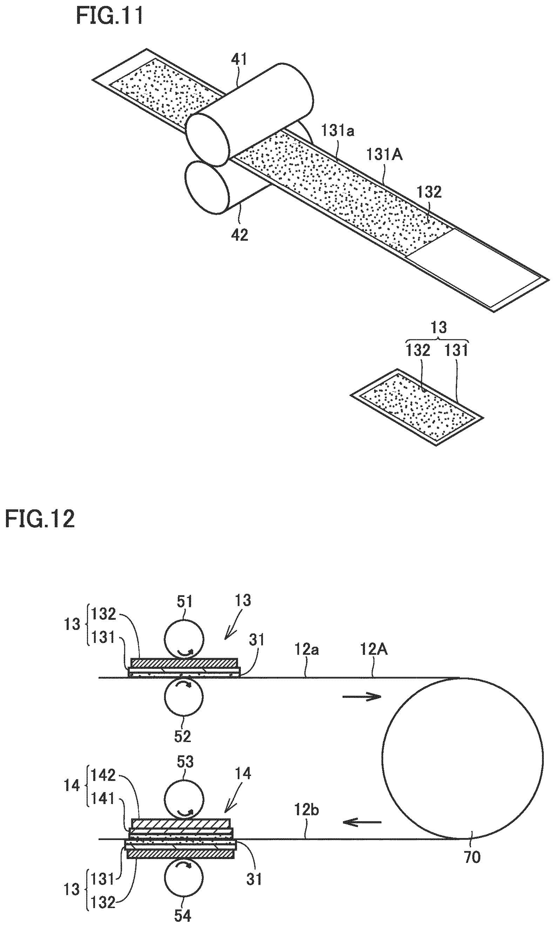

Fig. 11 is a view showing a modification of the step of forming the first active material layer on the first current collector. As shown in Fig. 11, negative electrode active material layer 132 may be pressed by the pair of pressure rollers 41 and 42 in a state of being applied to first surface 131a continuously in a direction in which belt-like current collector 131A extends. In this case, after pressing, positive electrode portion 14 may be stamped out from belt-like current collector 131A to have a predetermined size. It should be noted that this step may also be applied to the step of forming positive electrode active material layer 142 on positive electrode current collector plate 141.

Fig. 12 is a view showing a first modification of the step of bonding the first current collector to the front surface of the intermediate conductor and the step of bonding the second current collector to the back surface of the intermediate conductor.

As shown in Fig. 12, the step of bonding negative electrode current collector plate 131 to front surface 12a of intermediate conductor 12 and the step of bonding positive electrode current collector plate 141 to back surface 12b of intermediate conductor 12 may be performed continuously.

Specifically, in the step of bonding negative electrode current collector plate 131 to front surface 12a of intermediate conductor 12, negative electrode current collector plate 131 is bonded to front surface 12a of a belt-like intermediate conductor 12A conveyed by a conveying roller 70. The bonding method is substantially the same as that in the embodiment described above.

When intermediate conductor 12A passes through conveying roller 70, for example, it is conveyed from a state in which front surface 12a is located on an upper side to a state in which back surface 12b is located on the upper side. Subsequently, positive electrode current collector plate 141 is bonded to back surface 12b located on the upper side. The bonding method is substantially the same as that in the embodiment described above.

Thus, in the first modification, negative electrode current collector plate 131 is bonded to front surface 12a of intermediate conductor 12A conveyed continuously, and thereafter, on a downstream side in a direction in which intermediate conductor 12A is conveyed, positive electrode current collector plate 141 is bonded to back surface 12b of intermediate conductor 12A at a position corresponding to bonded negative electrode current collector plate 131.

Intermediate conductor 12A to which negative electrode current collector plate 131 and positive electrode current collector plate 141 are bonded is cut to manufacture bipolar electrode 11.

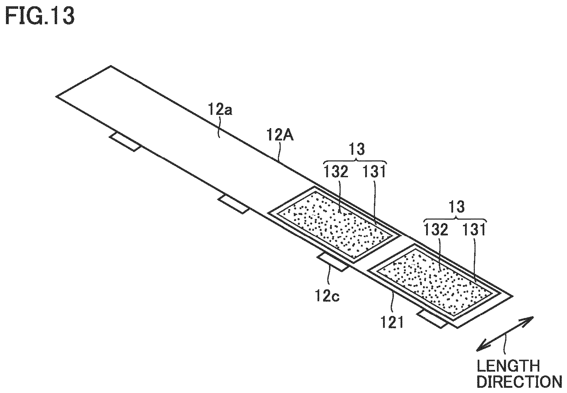

Fig. 13 is a view showing a second modification of the step of bonding the first current collector to the front surface of the intermediate conductor. Belt-like intermediate conductor 12A may have a side portion 121 located on one side in the length direction orthogonal to the stacking direction and constituting a portion of an outer edge of intermediate conductor 12, and a tab 12c protruding outward in the length direction (toward the one side in the length direction) from side portion 121.

In this case, as shown in Fig. 13, in the step of bonding the second surface of negative electrode current collector plate 131, the position for bonding negative electrode current collector plate 131 to intermediate conductor 12A is determined using tab 12c as a mark. Specifically, the position of tab 12c is detected using a position detection device such as an image reading device, and the position for bonding negative electrode current collector plate 131 is determined based on information of the detected position.

In the length direction, the length of intermediate conductor 12A is longer than the length of negative electrode current collector plate 131. In a state in which negative electrode current collector plate 131 is bonded to intermediate conductor 12A, both ends of intermediate conductor 12A in the length direction are located outside negative electrode current collector plate 131 in the length direction.

Similarly, in the step of bonding first main surface 141a of positive electrode current collector plate 141, the position for bonding positive electrode current collector plate 141 to intermediate conductor 12A is determined using tab 12c as a mark. Specifically, the position of tab 12c is detected using a position detection device such as an image reading device, and the position for bonding positive electrode current collector plate 141 is determined based on information of the detected position.

In the length direction, the length of intermediate conductor 12A is longer than the length of positive electrode current collector plate 141. In a state in which positive electrode current collector plate 141 is bonded to intermediate conductor 12A, the both ends of intermediate conductor 12A in the length direction are located outside positive electrode current collector plate 141 in the length direction.

It should be noted that, although the first modification and the second modification have described an exemplary case where belt-like continuous intermediate conductor 12A is conveyed and negative electrode current collector plate 131 and positive electrode current collector plate 141 are sequentially bonded to conveyed belt-like intermediate conductor 12A, the present disclosure is not limited thereto. Intermediate conductor 12 may be cut in advance into the size of bipolar electrode 11 and individually conveyed, and negative electrode current collector plate 131 and positive electrode current collector plate 141 may be sequentially bonded to intermediate conductor 12. Intermediate conductor 12 itself cut in advance may be provided with tab 12c. Tab 12c can be used as a voltage detection terminal for detecting a voltage between bipolar electrodes adjacent to each other.

The embodiment disclosed herein is illustrative and non-restrictive in every respect. The scope of the present disclosure is defined by the scope of the claims, and includes any modifications within the scope and meaning equivalent to the scope of the claims.

### REFERENCE SIGNS LIST

1: bipolar battery; 10: stacked body; 11: bipolar electrode; 12, 12A: intermediate conductor; 12a, 13a: front surface; 12b: back surface; 12c: tab; 13: negative electrode portion; 14: positive electrode portion; 15: separator; 16, 17: termination electrode; 20: sealing portion; 31: first conductive adhesive layer; 32: second conductive adhesive layer; 41, 42, 43, 44, 51, 52, 53, 54, 55, 56: pressure roller; 70: conveying roller; 100: power storage device; 110: module stacked body; 120: conductive plate; 121: side portion; 130: positive electrode terminal; 131: negative electrode current collector plate; 131A: current collector; 131a: first surface; 131b: second surface; 132: negative electrode active material layer; 140: negative electrode terminal; 141: positive electrode current collector plate; 141A: current collector; 141a: first main surface; 141b: second main surface; 142: positive electrode active material layer; 150: restraining member; CL1, CL2: cutting line; L1, L2, L3, L4, L5: length.

## Claims

1. A bipolar electrode comprising a first active material layer, a first current collector, an intermediate conductor, a second current collector, and a second active material layer that are stacked in order in a stacking direction, wherein
the intermediate conductor has a front surface located on one side in the stacking direction, and a back surface located on another side in the stacking direction,
the first current collector has a first surface located on the one side in the stacking direction, and a second surface located on the other side in the stacking direction,
the second current collector has a first main surface located on the one side in the stacking direction, and a second main surface located on the other side in the stacking direction,
the first active material layer is provided on the first surface of the first current collector,
the second active material layer is provided on the second main surface of the second current collector,
the second surface of the first current collector is bonded to the front surface of the intermediate conductor,
the first main surface of the second current collector is bonded to the back surface of the intermediate conductor,
in a length direction orthogonal to the stacking direction, a length of the first active material layer is longer than a length of the second active material layer,
the second active material layer is located inside the first active material layer when viewed from the stacking direction, and
in the length direction, a length of the intermediate conductor is longer than lengths of the first current collector and the second current collector.

2. The bipolar electrode according to claim 1, wherein a density of the first active material layer is lower than a density of the second active material layer.

3. The bipolar electrode according to claim 1 or 2, wherein, in the length direction, the length of the first current collector is longer than the length of the second current collector.

4. The bipolar electrode according to claim 1 or 2, comprising:
a first conductive adhesive layer bonding the second surface of the first current collector and the front surface of the intermediate conductor; and
a second conductive adhesive layer bonding the first main surface of the second current collector and the back surface of the intermediate conductor.

5. The bipolar electrode according to claim 4, wherein the first conductive adhesive layer and the second conductive adhesive layer contain conductive particles obtained by metal-coating resin powder.

6. The bipolar electrode according to claim 5, wherein thicknesses of the first conductive adhesive layer and the second conductive adhesive layer parallel to the stacking direction are substantially equal to a particle diameter of the conductive particles.

7. The bipolar electrode according to claim 1 or 2, wherein the intermediate conductor has a side portion located on one side in the length direction when viewed from the stacking direction and constituting a portion of an outer edge of the intermediate conductor, and a tab protruding outward in the length direction from the side portion.

8. A bipolar battery comprising:
a stacked body including a plurality of the bipolar electrodes according to claim 1 or 2 stacked along the stacking direction; and
a sealing body sealing a peripheral edge portion of the stacked body to surround the first active material layer and the second active material layer when viewed from the stacking direction.

9. A method for manufacturing a bipolar electrode, the method comprising stacking a first active material layer, a first current collector, an intermediate conductor, a second current collector, and a second active material layer in a stacking direction, wherein
the stacking includes
forming the first active material layer on a first surface of the first current collector having the first surface and a second surface opposite to each other,
forming the second active material layer on a second main surface of the second current collector having a first main surface and the second main surface opposite to each other,
bonding the second surface to a front surface of the intermediate conductor, and
bonding the first main surface to a back surface of the intermediate conductor,
in the forming of the second active material layer, the second active material layer is formed such that a length of the second active material layer in a length direction orthogonal to the stacking direction is shorter than that of the first active material layer,
in the bonding of the first surface of the second current collector, the second current collector is bonded such that the second active material layer is located inside the first active material layer when viewed from the stacking direction, and
as the intermediate conductor, an intermediate conductor having a length longer than those of the first current collector and the second current collector is used.

10. The method for manufacturing the bipolar electrode according to claim 9, wherein
the forming of the first active material layer includes pressing the first active material layer applied to the first surface of the first current collector,
the forming of the second active material layer includes pressing the second active material layer applied to the second main surface of the second current collector, and
a pressure for pressing the second active material layer is greater than a pressure for pressing the first active material layer.

11. The method for manufacturing the bipolar electrode according to claim 9, wherein
the bonding of the second surface of the first current collector includes applying a first conductive adhesive layer to the second surface, and pressing the first current collector toward the intermediate conductor in a state in which the applied first conductive adhesive layer is in contact with the front surface of the intermediate conductor, and
the bonding of the first main surface of the second current collector includes applying a second conductive adhesive layer to the second main surface, and pressing the second current collector toward the intermediate conductor in a state in which the applied second conductive adhesive layer is in contact with the back surface of the intermediate conductor.

12. The method for manufacturing the bipolar electrode according to claim 11, wherein, as the first conductive adhesive layer and the second conductive adhesive layer, conductive adhesive layers containing conductive particles obtained by metal-coating resin powder are used.

13. The method for manufacturing the bipolar electrode according to claim 12, wherein
in the bonding of the second surface of the first current collector, the first current collector is bonded to the intermediate conductor such that the first conductive adhesive layer parallel to the stacking direction is substantially equal to a particle diameter of the conductive particles, and
in the bonding of the first surface of the second current collector, the second current collector is bonded to the intermediate conductor such that the second conductive adhesive layer parallel to the stacking direction is substantially equal to the particle diameter of the conductive particles.

14. The method for manufacturing the bipolar electrode according to any one of claims 11 to 13, wherein
the forming of the first active material layer includes pressing the first active material layer applied to the first surface of the first current collector,
the forming of the second active material layer includes pressing the second active material layer applied to the second main surface of the second current collector, and
each of a pressure for pressing the first current collector toward the intermediate conductor and a pressure for pressing the second current collector toward the intermediate conductor is smaller than a pressure for pressing the first active material layer and a pressure for pressing the second active material layer.

15. The method for manufacturing the bipolar electrode according to any one of claims 9 to 13, wherein
the intermediate conductor has a side portion located on one side in the length direction when viewed from the stacking direction and constituting a portion of an outer edge of the intermediate conductor, and a tab protruding outward in the length direction from the side portion,
the bonding of the second surface of the first current collector includes determining a position for bonding the first current collector to the intermediate conductor using the tab as a mark, and
the bonding of the first main surface of the second current collector includes determining a position for bonding the second current collector to the intermediate conductor using the tab as a mark.
